# FASCICULE DE BREVET EUROPEEN

(11) **EP 0 748 941 B1**
(45) Date de publication et mention de la délivrance du brevet: **28.08.2002**
(21) Numéro de dépôt: 96109279.8
(22) Date de dépôt: 10.06.1996
(51) Int. Cl.: F04D 29/42, F04D 29/62, B60H 1/00

(54) **Boîtier de groupe moto-ventilateur pour appareil de chauffage et/ou climatisation de véhicule automobile**
Gehäuse einer Motor-Gebläse Einheit für eine Heizungs- und/oder Klimaanlage eines Kraftfahrzeuges
Housing of a motor-blower combination for a heating and/or ventilating apparatus of a motor vehicle

(30) Priorité: 14.06.1995 FR 9507092
(43) Date de publication de la demande: 18.12.1996
(73) Titulaire: VALEO CLIMATISATION, 78320 Le Mesnil Saint-Denis (FR)
(72) Inventeur: Raccouard, Michel, 78310 Maurepas (FR)
(74) Mandataire: Gamonal, Didier

(56) Documents cités:
- DE-U- 8 914 525
- FR-A- 2 236 384
- FR-A- 2 412 976
- US-A- 3 434 653
- US-A- 4 672 819

## Description

L'invention concerne un boîtier de groupe moto-ventilateur pour un appareil de chauffage et/ou climatisation de véhicule automobile.

Elle concerne plus particulièrement un boîtier du type comprenant une partie périphérique formant volute, destinée à alimenter en air pulsé ledit appareil, et une partie extrémale délimitant une chambre propre à loger une enveloppe externe de moteur électrique, dont l'axe est rendu solidaire d'une turbine logée dans la volute pour l'alimenter en air pulsé.

Un dispositif de ce type est enseigné, par exemple, par les publications FR-A-2 236 384 et FR-A-2 412 976.

Dans un dispositif de ce type,la partie périphérique formant volute et la partie extrémale supportant le moteur sont généralement obtenues par moulage de matière plastique et solidarisées l'une à l'autre par plusieurs vis.

Il en résulte des problèmes d'étanchéité au niveau du raccordement de la partie périphérique et de la partie extrémale.

En outre, un boîtier de ce type génère du bruit et des vibrations.

Par ailleurs, ces boîtiers connus ne permettent pas toujours d'assurer un positionnement précis du moteur par rapport à la volute.

L'invention a notamment pour but de surmonter les inconvénients précités.

Elle propose à cet effet un boîtier du type défini en introduction, dans lequel la partie périphérique formant volute comprend un premier élément qui délimite une ouverture en forme générale de U débouchant sur une face ouverte du premier élément, dans lequel la partie extrémale comprend une jupe présentant un bord en forme générale de U propre à s'emboîter par coopération de formes dans l'ouverture en U du premier élément par un montage en tiroir, et dans lequel la partie périphérique comprend un deuxième élément propre à être assemblé au premier élément pour maintenir l'emboîtement mutuel de la partie extrémale et du premier élément, et assurer en même temps la fermeture de la face ouverte du premier élément.

Ainsi, la partie extrémale supportant le moteur vient s'emboîter dans le premier élément de la partie périphérique par un montage en tiroir, puis le second élément de la partie périphérique est assemblé au premier élément pour fermer la face ouverte de ce premier élément.

Ainsi, ce second élément constitue une sorte de capot ou de couvercle qui contribue au maintien de la partie extrémale et à la formation de la volute.

Du fait que le bord en U de la jupe de la partie extrémale est emboîté par coopération de formes dans l'ouverture en U du premier élément, il en résulte une bonne étanchéité, ainsi qu'une atténuation du bruit et des vibrations.

Par ailleurs, le montage en tiroir de la partie extrémale permet d'assurer automatiquement un positionnement précis du moteur par rapport au boîtier, et donc de l'hélice par rapport à la volute.

Selon une autre caractéristique de l'invention, l'ouverture en forme générale de U du premier élément est ménagée dans une paroi du premier élément qui s'étend transversalement à l'axe du moteur.

De préférence, le bord en U de la jupe comprend des premiers moyens d'emboîtement destinés à assurer une coopération de formes avec des seconds moyens d'emboîtement que comprend l'ouverture en U du premier élément.

Avantageusement, le bord en U de la jupe comprend deux parties longitudinales sensiblement rectilignes et une partie curviligne reliant ces deux parties longitudinales.

De préférence, les deux parties longitudinales vont en s'évasant à partir de la partie curviligne pour former un profil conique facilitant l'emboîtement mutuel de la partie extrémale et du premier élément.

Selon une autre caractéristique de l'invention, les premiers moyens d'emboîtement du bord en U de la jupe forment une rainure, tandis que les seconds moyens d'emboîtement du premier élément forment une nervure.

Il est avantageux que la rainure du bord en U de la jupe soit propre à loger la nervure de l'ouverture en U du premier élément de la volute avec interposition d'un joint d'étanchéité réalisé de préférence dans un matériau élastomère.

Ce joint d'étanchéité est avantageusement surmoulé dans la rainure du bord en U.

Selon une autre caractéristique de l'invention, la jupe de la partie extrémale présente un bord transversal situé à l'opposé du bord en U et propre à s'emboîter avec un bord interne du second élément de la volute.

Avantageusement, le bord interne du second élément comprend des troisièmes moyens d'emboîtement destinés à assurer une coopération de formes avec des quatrièmes moyens d'emboîtement que comprend le bord transversal de la jupe.

De préférence, les troisièmes moyens d'emboîtement du second élément forment une rainure, tandis que les quatrièmes moyens d'emboîtement de la jupe forment une nervure.

Avantageusement, les moyens d'emboîtement logent un passe-fil en matériau élastique, de préférence en matériau élastomère, pour laisser passage à des fils d'alimentation du moteur électrique.

Selon une autre caractéristique de l'invention, le second élément comprend au moins deux logements traversants propres à autoriser le passage de moyens de fixation, de type vis, destinés à solidariser le second élément au premier élément.

Dans la description qui suit, faite seulement à titre d'exemple, on se réfère aux dessins annexés, sur lesquels:
- la figure 1 est une vue de dessus d'un boîtier d'un groupe moto-ventilateur selon l'invention;
- la figure 2 est une vue en coupe, avec arrachement partiel, selon la ligne II-II de la figure 1;
- la figure 3 est un détail de la figure 2, en vue éclatée et à échelle agrandie;
- la figure 4 est une vue partielle de dessus de la jupe du boîtier au niveau d'une partie du bord transversal destinée à recevoir un passe-fil;
- la figure 5 est une vue analogue à celle de la figure 4 après mise en place du passe-fil et des fils d'alimentation du moteur;
- la figure 6 est une variante de réalisation analogue à celle de la figure 4; et
- la figure 7 est une vue analogue à la figure 6 après insertion du passe-fil et des fils d'alimentation du moteur.

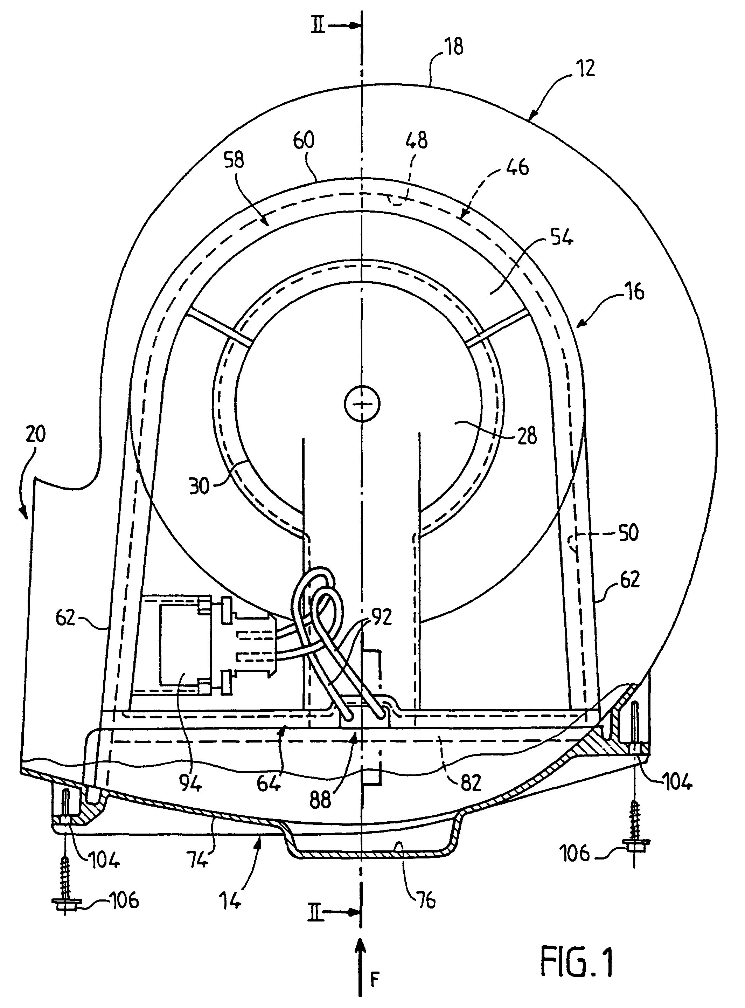

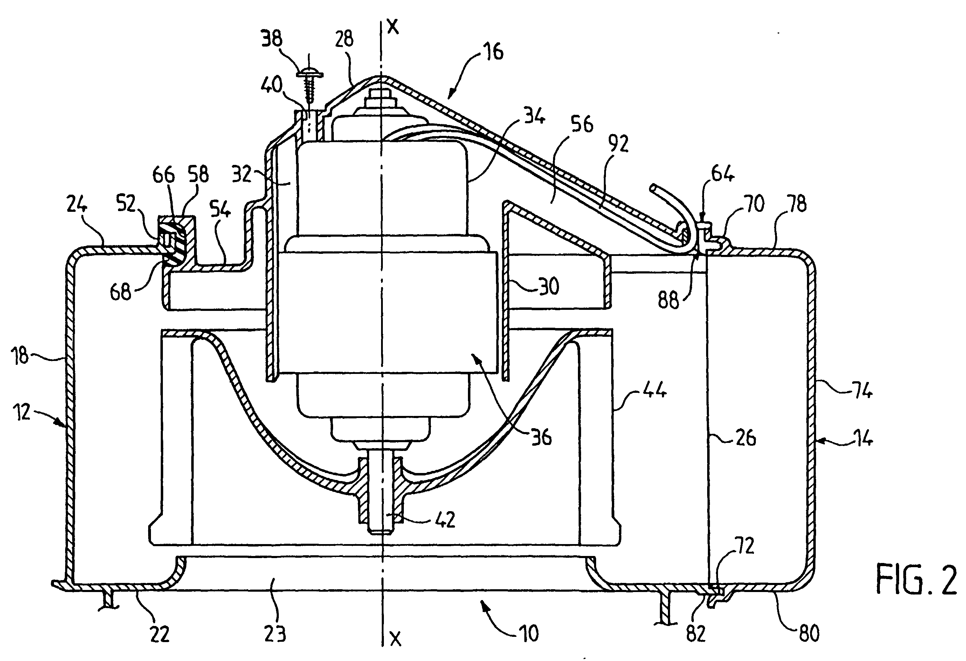

Le boîtier représenté aux figures 1 et 2 comprend une partie périphérique 10 formant volute et constituée d'un premier élément 12 et d'un second élément 14, ainsi qu'une partie extrémale 16 assemblée sur la partie périphérique 10.

L'élément 12 comprend une paroi latérale 18 à génératrices parallèles s'appuyant sur une directrice en forme générale de spirale ou volute, et aboutissant à une sortie latérale 20.

La paroi latérale 18 se raccorde à une paroi d'extrémité 22 ménageant une ouverture d'entrée 23 de forme circulaire, centrée autour d'un axe XX, et à une autre paroi d'extrémité 24 sur laquelle s'emboîte la partie extrémale 16.

En outre, la paroi latérale 18 est interrompue pour délimiter une face ouverte 26 de contour général rectangulaire sur laquelle est assemblé l'élément 14, en sorte que les deux éléments 12 et 14, une fois assemblés, forment la volute.

La partie extrémale 16 comporte une paroi de fond 28 de forme généralement conique qui se rattache à une paroi latérale 30 de forme sensiblement cylindrique pour définir ensemble une chambre 32 propre à loger une enveloppe externe 34 d'un moteur électrique 36. L'enveloppe 34 est maintenue en position dans la chambre 32 par l'intermédiaire d'au moins une vis 38 traversant une ouverture 40 ménagée dans la paroi de fond 28 et coopérant par vissage avec l'enveloppe 34.

Le moteur électrique 36 comprend un arbre 42 d'axe X-X sur lequel est calée une turbine 44 logée dans la volute.

Lorsque la turbine 44 est entraînée en rotation autour de son axe, elle aspire un flux d'air qui pénètre dans la volute par l'ouverture d'entrée 23, est ensuite accélérée tangentiellement dans la volute pour quitter cette dernière par la sortie latérale 20.

La paroi d'extrémité 24 du premier élément 12 délimite une ouverture 46 en forme générale de U (figure 1) qui débouche sur la face ouverte 26 de l'élément 12. L'ouverture 46 comprend une partie curviligne 48 sensiblement semi-circulaire se raccordant à deux parties longitudinales rectilignes 50 qui vont en s'évasant légèrement en direction de la face ouverte 26. L'ouverture 48 est bordée, sur tout son pourtour, par une nervure 52 (figure 2).

La paroi latérale 30 de la partie extrémale 16 se rattache à une jupe 54 réalisée sous la forme d'une paroi qui s'étend dans un plan généralement perpendiculaire à l'axe X-X. Un conduit 56 formant passage d'admission d'air débouche, d'une part dans la jupe 54, et d'autre part dans la paroi latérale 30 pour former un passage d'admission d'air servant au refroidissement du moteur.

La jupe 54 présente un bord en U 58 destiné à coopérer par emboîtement avec la nervure 52 bordant l'ouverture en U 46. Le bord en U 58 comprend une partie curviligne sensiblement semi-circulaire 60 raccordée à deux parties longitudinales rectilignes 62 qui vont en s'évasant et se raccordent à un bord transversal rectiligne 64, situé à l'opposé de la partie sensiblement circulaire 60. Le bord en U 58 de la jupe est réalisé sous la forme d'une rainure 66 à gorge en U (figure 2) destinée à coopérer par emboîtement avec la nervure 52 bordant l'ouverture 46.

Un joint d'étanchéité 68, de préférence formé à partir d'un matériau élastomère, est interposé au montage entre la rainure 66 et la nervure 52.

Ainsi, la jupe 54 peut s'emboîter dans l'ouverture en U 46, par coopération de formes, suivant un montage en tiroir par coulissement dans le sens de la flèche F (figures 1 et 2).

Le montage en tiroir conduit à un assemblage étanche entre la partie extrémale 16 et le premier élément 12 de la partie périphérique 10. Il en résulte également que l'axe du moteur se trouve parfaitement positionné par rapport à la volute. Après emboîtement, le bord transversal 64 de la jupe se trouve au niveau de la face ouverte 26 et contribue à délimiter cette dernière.

Le bord transversal 64 est propre à coopérer par emboîtement avec un bord interne 70 du second élément de volute 14. Ce bord interne 70 est réalisé sous la forme d'une rainure 72 qui s'étend sur tout le pourtour de l'élément 14. Ce dernier comporte une paroi latérale 74 dans laquelle est formée une poignée 76 facilitant l'insertion ou l'extraction du montage en tiroir, ainsi que deux parois opposées 78 et 80.

La partie 12 comporte, sur tout le pourtour de sa face ouverte, y compris le bord transversal 64, une nervure 82 destinée à coopérer avec la rainure 72 de l'élément 14.

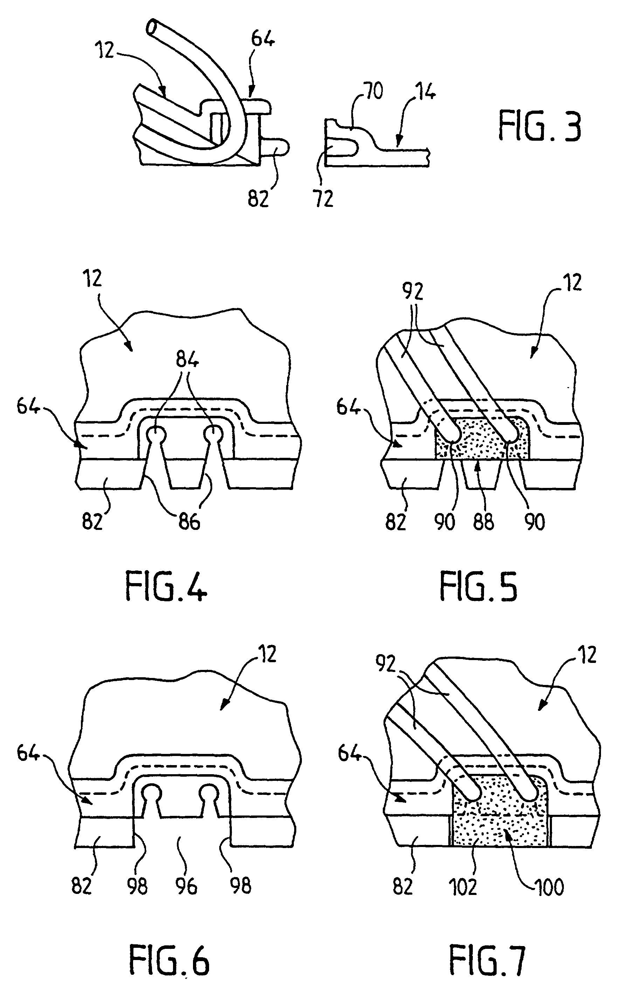

Le bord transversal 64 de la jupe en U est aménagé pour former deux ouvertures circulaires 84 qui débouchent à l'extérieur de la jupe par deux échancrures évasées 86 ménagées dans la nervure 82 (figure 4).

La jupe 54 permet ainsi d'accueillir, dans la partie centrale du bord transversal 64, un passe-fil 88 (figures 1, 2, 3 et 5) sous la forme d'un bloc élastomère comportant deux ouvertures 90 alignées avec les ouvertures 84 pour permettre le passage de deux fils électriques 92 servant à l'alimentation du moteur électrique 36. Ces fils traversent ainsi à étanchéité la partie extrémale 16 et sont reliés à un connecteur 94 extérieur au boîtier (figure 1).

Dans la variante de réalisation de la figure 6, les deux ouvertures 84 débouchent dans une échancrure large 96 délimitée par deux bords latéraux 98 et formée dans la nervure 82.

Le bord de la jupe peut ainsi recevoir un passe-fil 100 qui est sensiblement identique au passe-fil 88, sauf qu'il comprend une partie 102 formant nervure et qui vient assurer la continuité avec la nervure 82. Cette partie 102 vient s'emboîter dans la rainure 72.

Ce dernier comprend en outre au moins deux logements traversants 104 (figure 1) propres à autoriser le passage de vis de fixation 106 destinées à solidariser l'élément 14 à l'élément 12.

L'invention permet ainsi de réaliser un boîtier dont les composants sont assemblés entre eux de façon étanche, en assurant un parfait positionnement du moteur, et en minimisant les bruits et vibrations engendrés par la rotation du moteur et de l'hélice.

## Revendications

1. Boîtier de groupe moto-ventilateur pour appareil de chauffage et/ou de climatisation de véhicule automobile, du type comprenant une partie périphérique (10) formant volute, destinée à alimenter en air pulsé ledit appareil, et une partie extrémale (16) délimitant une chambre (32) propre à loger une enveloppe externe (34) d'un moteur électrique (36) dont l'axe (42) est rendu solidaire d'une turbine (44) logée dans la volute pour l'alimenter en air pulsé,
**caractérisé en ce que** la partie périphérique (10) comprend un premier élément (12) qui délimite une ouverture (46) en forme générale de U débouchant sur une face ouverte (26) de ce premier élément,
**en ce que** la partie extrémale (16) comprend une jupe (54) présentant un bord (58) en forme générale de U propre à s'emboîter par coopération de formes dans l'ouverture en U (46) du premier élément (12) par un montage en tiroir, et
**en ce que** la partie périphérique (10) comprend un second élément (14) propre à être assemblé au premier élément (12) pour maintenir l'emboîtement mutuel de la partie extrémale (16) et du premier élément (12), et assurer en même temps la fermeture de la face ouverte (26) du premier élément (12).

2. Boîtier selon la revendication 1, **caractérisé en ce que** l'ouverture en U (46) du premier élément (12) est ménagée dans une paroi (24) du premier élément (12), qui s'étend transversalement à l'axe du moteur.

3. Boîtier selon l'une des revendications 1 et 2, **caractérisé en ce que** le bord en U (58) de la jupe (54) comprend des premiers moyens d'emboîtement (66) destinés à assurer la coopération de formes avec des seconds moyens d'emboîtement (52) que comprend l'ouverture en U (46) du premier élément (10).

4. Boîtier selon l'une des revendications 1 à 3, **caractérisé en ce que** le bord en U (58) de la jupe (54) comprend deux parties longitudinales (62) sensiblement rectilignes et une partie curviligne (60) reliant ces deux parties longitudinales.

5. Boîtier selon la revendication 4, **caractérisé en ce que** les deux parties longitudinales (62) vont en s'évasant à partir de la partie curviligne (60) pour former un profil conique facilitant l'emboîtement mutuel de la partie extrémale (16) et du premier élément (12).

6. Boîtier selon l'une des revendications 3 à 5, **caractérisé en ce que** les premiers moyens d'emboîtement du bord en U (58) de la jupe (54) forment une rainure (66), tandis que les seconds moyens d'emboîtement du premier élément (12) forment une nervure (52).

7. Boîtier selon l'une des revendications 4 à 6, **caractérisé en ce que** la rainure (66) du bord en U (58) de la jupe (54) est propre à loger la nervure (52) de l'ouverture en U (46) du premier élément (10) de la volute avec interposition d'un joint d'étanchéité (68) réalisé de préférence dans un matériau élastomère.

8. Boîtier selon la revendication 7, **caractérisé en ce que** le joint d'étanchéité (68) est surmoulé dans la rainure (66) du bord en U (58).

9. Boîtier selon l'une des revendications 1 à 8, **caractérisé en ce que** la jupe (54) de la partie extrémale (16) présente un bord transversal (64) situé à l'opposé du bord en U (58) et propre à s'emboîter avec un bord interne (70) du second élément (14) de la volute.

10. Boîtier selon la revendication 9, **caractérisé en ce que** le bord interne (70) du second élément (14) comprend des troisièmes moyens d'emboîtement (72) destinés à assurer une coopération de formes avec des quatrièmes moyens d'emboîtement (86) que comprend le bord transversal (64) de la jupe (54).

11. Boîtier selon la revendication 10, **caractérisé en ce que** les troisièmes moyens d'emboîtement du second élément (14) forment une rainure (72), tandis que les quatrièmes moyens d'emboîtement de la jupe (54) forment une nervure (82).

12. Boîtier selon la revendication 11, **caractérisé en ce que** les moyens d'emboîtement logent un passe-fil (88) en matériau élastique, de préférence dans un matériau élastomère, pour laisser passage à des fils d'alimentation (92) du moteur électrique (36).

13. Boîtier selon l'une des revendications 1 à 12, **caractérisé en ce que** le second élément (14) comprend au moins deux logements traversants (104) propres à autoriser le passage de moyens de fixation (106), de type vis, destinés à solidariser le second élément (14) au premier élément (12).

## Claims

1. A casing of a motorised blower unit for a motor vehicle heating and/or air conditioning apparatus, of the type comprising a peripheral portion (10) defining a volute and adapted to supply the said apparatus with blown air, together with an end portion (16) defining a chamber (32) for containing, mounted therein, an outer envelope (34) of an electric motor (36), the shaft of which is fixed with respect to a blower rotor (44) mounted in the volute for supplying it with blown air,
**characterised in that** the peripheral portion (10) includes a first element (12) which delimits a generally U-shaped aperture (46) open in an open face (26) of the said first element,
**in that** the end portion (16) includes a skirt (54) having a generally U-shaped edge (58) adapted to engage, in mating cooperation, in the U-shaped aperture (46) of the first element (12), in a drawer-type mounting, and
**in that** the peripheral portion (10) includes a second element (14) adapted to be assembled with the first element (12) so as to maintain the mutual mating engagement of the end portion (16) and first element (12), while at the same time closing off the open face (26) of the first element (12).

2. A casing according to Claim 1, **characterised in that** the U-shaped aperture (46) of the first element (12) is formed in a wall (24) of the first element (12) that extends transversely to the motor shaft.

3. A casing according to Claim 1 or Claim 2, **characterised in that** the U-shaped edge (58)of the skirt (54) includes first mating means (66) for effecting the said mating engagement with second mating means (52) defined by the U-shaped aperture (46) of the first element (12).

4. A casing according to one of Claims 1 to 3, **characterised in that** the U-shaped edge (58) of the skirt (54) comprises two substantially straight longitudinal portions (62) and a curved portion (60) joining the two said longitudinal portions together.

5. A casing according to Claim 4, **characterised in that** the two straight portions (62) are divergent away from the curved portion (60), thereby defining a conical profile which facilitates the mutual mating engagement of the end portion (16) and first element (12).

6. A casing according to one of Claims 3 to 5, **characterised in that** the first mating means in the U-shaped edge (58) of the skirt (54) consist of a groove (66), while the second mating means of the first element (12) consist of a rib (52).

7. A casing according to one of Claims 4 to 6, **characterised in that** the groove (66) in the U-shaped edge (58) of the skirt (54) is adapted to receive within it the rib (52) of the U-shaped aperture (46) in the first element (12) of the volute and an interposed sealing ring (6.8), preferably made of elastomeric material.

8. A casing according to Claim 7, **characterised in that** the sealing ring (68) is formed in the groove (66) of the U-shaped edge (58) by *in situ* moulding.

9. A casing according to one of Claims 1 to 8, **characterised in that** the skirt (54) of the end portion (16) has a transverse edge (64), situated on the opposite side from the U-shaped edge (58) and adapted for mating engagement with an internal edge (70) of the second element (14) of the volute.

10. A casing according to Claim 9, **characterised in that** the internal edge (70) of the second element (14) includes third mating means (72) for mating cooperation with fourth mating means (82) defined in the transverse edge (64) of the skirt (54).

11. A casing according to Claim 10, **characterised in that** the third mating means of the second element (14) consist of a groove (72), while the fourth mating means in the skirt (54) consist of a rib (82)

12. A casing according to Claim 1, **characterised in that** a grommet (88) of resilient material, preferably an elastomeric material, is mounted in the mating means to allow power supply wires (92) for the electric motor (36) to pass through.

13. A casing according to one of Claims 1 to 12, **characterised in that** the second element (14) has at least two through passages (104) for passage through them of fastening means (106) of the screw type, for securing the second element (14) to the first element (12).

## Patentansprüche

1. Gehäuse für eine Motor-Ventilator-Gruppe einer Kraftfahrzeugheiz- und/oder -klimaanlage, vom Typ, umfassend ein peripheres Teil (10), welches eine Volute ausbildet, bestimmt zur Versorgung der Anlage mit beaufschlagter Luft, und ein distales oder End-Teil (16), eine Kammer (32) begrenzend, die eine Außenhülle (34) eines Elektromotors (36) aufnehmen kann, dessen Achse (42) mit einem Lüfterrad (44) verbunden ist, welches in der Volute aufgenommen ist, um dieses mit beaufschlagter Luft zu versorgen, **dadurch gekennzeichnet, daß** der periphere Teil (10) ein erstes Element (12) umfaßt, welches eine Öffnung (46) in genereller U-Form begrenzt, an einer offenen Fläche (26) des ersten Elementes mündend,
daß der distale oder End-Teil (16) eine Schürze (54) umfaßt, die einen Rand (58) in genereller U-Form aufweist, geeignet zum Formen-Wechselwirkungseingriff mit der U-förmigen Öffnung (46) des ersten Elementes (12) durch eine schubladenartige Montage, und
daß das periphere Teil (10) ein zweites Element (14) umfaßt, geeignet zum Zusammenbau mit dem ersten Element (12) zum Aufrechterhalten des wechselseitigen Eingriffs des distalen oder End-Teils (16) und des ersten Elementes (12) und gleichzeitig das Verschließen der offenen Fläche (26) des ersten Elementes (12) sicherzustellen.

2. Gehäuse nach Anspruch 1, **dadurch gekennzeichnet, daß** die U-förmige Öffnung (46) des ersten Elementes (12) in einer Wandung (24) des ersten Elementes (12) ausgebildet ist, die sich transversal zur Achse des Motors erstreckt.

3. Gehäuse nach einem der Ansprüche 1 und 2, **dadurch gekennzeichnet, daß** der U-förmige Rand (58) der Schürze (54) erste Eingriffsmittel (66) umfaßt, bestimmt zum Gewährleisten der Formenwechselwirkung bzw. des Formschlusses mit zweiten Eingriffsmitteln (52), die die U-formige Öffnung (46) des ersten Elementes (10) umfaßt.

4. Gehäuse nach einem der Ansprüche 1 bis 3, **dadurch gekennzeichnet, daß** der U-förmige Rand (58) der Schürze (54) zwei Longitudinalabschnitte (62) umfaßt, die im wesentlichen geradlining sind, sowie einen gekrümmten Abschnitt (60), der die zwei longitudinalen Abschnitte (62) verbindet.

5. Gehäuse nach Anspruch 4, **dadurch gekennzeichnet, daß** die zwei longitudinalen oder Längs-Abschnitte (62) unter Ausweitung ausgehend von dem gekrümmten Abschnitt (60) verlaufen, um ein konisches Profil auszubilden, welches den wechselseitigen Eingriff des Endteiles (16) und des ersten Elementes (12) vereinfacht.

6. Gehäuse nach einem der Ansprüche 3 bis 5, **dadurch gekennzeichnet, daß** die ersten Eingriffsmittel des U-förmigen Randes (58) der Schürze (54) eine Rinne oder Rille (66) ausbilden, während die zweiten Eingriffsmittel des ersten Elementes (12) eine Rippe oder einen Grat (52) ausbilden.

7. Gehäuse nach einem der Ansprüche 4 bis 6, **dadurch gekennzeichnet, daß** die Rinne (66) des U-förmigen Randes (58) der Schürze (54) geeignet ist, die Rippe (52) der U-förmigen Öffnung (46) des ersten Elementes (10) der Volute aufzunehmen, und zwar unter Zwischenlagerung einer Dichtungseinrichtung (68), vorteilhafterweise dargestellt in einem elastomeren Material.

8. Gehäuse nach Anspruch 7, **dadurch gekennzeichnet, daß** die Dichtungseinrichtung (68) in der Rinne (66) des U-förmigen Randes (58) angeformt bzw. angespritzt oder überformt ist.

9. Gehäuse nach einem der Ansprüche 1 bis 8, **dadurch gekennzeichnet, daß** die Schürze (54) des distalen oder End-Teiles (16) einen transversalen Rand (64) aufweist, der sich gegenüberstehend des U-förmigen Randes (58) befindet und in Eingriff treten kann mit einem Innenrand (70) des zweiten Elementes (14) der Volute.

10. Gehäuse nach Anspruch 9, **dadurch gekennzeichnet, daß** der Innenrand (70) des zweiten Elementes (14) dritte Eingriffsmittel (72) umfaßt, bestimmt zur Gewährleistung einer Formenwechselwirkung mit vierten Eingriffsmitteln, die der transversale Rand (64) der Schürze (54) umfaßt.

11. Gehäuse nach Anspruch 10, **dadurch gekennzeichnet, daß** die dritten Eingriffsmittel des zweiten Elementes (14) eine Rinne (72) ausbilden, während die vierten Eingriffsmittel der Schürze (54) eine Rippe oder einen Grat (82) ausbilden.

12. Gehäuse nach Anspruch 11, **dadurch gekennzeichnet, daß** die Eingriffsmittel eine Kabelführung (88) aus elastischem Material aufnehmen, insbesondere aus einem elastomeren Material, um einen Durchtritt für Versorgungskabel (92) des Elektromotors (36) zu gewährleisten.

13. Gehäuse nach einem der Ansprüche 1 bis 12, **dadurch gekennzeichnet, daß** das zweite Element (14) zumindest zwei Durchtrittsaufnahmen (104) umfaßt, die den Durchtritt von Befestigungsmitteln (106) ermöglichen können, insbesondere vom Schraubentyp, bestimmt zur Festlegung oder Verbindung des zweiten Elementes (14) mit oder an dem ersten Element (12).
